# EUROPÄISCHE PATENTSCHRIFT

(11) **EP 2 321 229 B1**
(45) Veröffentlichungstag und Bekanntmachung des Hinweises auf die Patenterteilung: **24.07.2013**
(21) Anmeldenummer: 09777837.7
(22) Anmeldetag: 12.08.2009
(51) Int. Cl.: C02F 1/463, C02F 3/28, C02F 1/461

(54) **ABWASSERREINIGUNGSVORRICHTUNG UMFASSEND EIN ANAEROBES FESTBETTFILTER UND EINE ELEKTROFLOCKULATIONSZELLE**
WASTE WATER CLEANING DEVICE COMPRISING AN ANAEROBIC FIXED BED FILTER AND AN ELECTROFLOCCULATION CELL
DISPOSITIF D ÉPURATION DES EAUX USÉES COMPRENANT UN FILTRE ANAÉROBIE À LIT FIXE ET UNE CELLULE D ÉLECTROFLOCULATION

(30) Priorität: 21.08.2008 DE 202008011162 U
(43) Veröffentlichungstag der Anmeldung: 18.05.2011
(73) Patentinhaber: Blum, Holger, 9053 Teufen (CH)
(72) Erfinder: Blum, Holger, 9053 Teufen (CH)
(74) Vertreter: Kirschner, Klaus Dieter
(86) Internationale Anmeldenummer: PCT/EP2009/005853
(87) Internationale Veröffentlichungsnummer: WO 2010/020369

(56) Entgegenhaltungen:
- CN-A- 101 024 534
- DE-U1-202008 003 027
- JP-A- 2003 266 074
- JP-A- 2006 095 466

## Beschreibung

Die Erfindung betrifft eine Reinigungsvorrichtung für hoch belastetes Abwasser.

Bei der anaeroben Abwasserreinigung werden die im Abwasser gelösten organischen Kohlenstoffverbindungen in Biogas (Methan und Kohlendioxid) umgewandelt. Die anaerobe Abwasserreinigung benötigt nur geringe oder gar keine zusätzliche Energie und erzeugt nur ca. 10% bis 15% des Schlammanfalls der aeroben Abwassertechnik.

Da überdies noch ein Wertstoff, Biogas, erzeugt wird, ist die anaerobe Reinigung von hoch belasteten Abwässern eine Technologie, die allen anderen möglichen Reinigungsverfahren hinsichtlich der Wirtschaftlichkeit den Rang abläuft.

Von allen technisch angewandten anaeroben Verfahren sind einzig die im Aufstrom betriebenen anaeroben Fettbettfilter in der Lage, auch mit Chemikalien und Arzneimittelresten hoch belastete Abwässer sicher zu reinigen. Diese biologische Stoffwechselleistung ist deshalb möglich, weil sich im Filterbett je nach Filterbetthöhe verschieden spezialisierte Mikroorganismen auf den Trägermaterialien ansiedein, weiche ihren Stoffwechsel der extremen Abwasserbelastung anpassen können.

Um in eine anaerobes Festbettfilter ständig eine hohe und optimale biologische Reinigungswirkung von Abwasser erreichen zu können, muss das dem Biofilter zufließende Rohwasser einerseits frei sein von suspendierten groben Stoffen um die Verstopfung des Trägermaterials im Festbettfilter zu unterbinden. Andererseits muss das dem Anaerobfilter zufließende Rohwasser genügend fein verteiltes Eisenhydroxid bzw. Eisenionen enthalten, um die Zellvergiftung und Beeinträchtigung der Leistungsfähigkeit der Mikroorganismen durch den bei der anaeroben Gärung aus Sulfationen gebildeten Schwefelwasserstoff zu unterbinden.

Üblicherweise werden dem Abwasser vor dem Eintritt in das Anaerobfilter Additive zudosiert. Diese Additive sind Stoffe zur Korrektur des pH-Wertes, wie Natriumbikarbonat oder Natriumhydroxid und Stoffe zum Aufbau der Zellmasse, wie Stickstoff in Form von Ammoniumsalzen oder Harnstoff, sowie phosphorsaure Salze. Weiterhin werden Spurenelemente wie z. B. in Wasser gelöste Cobalt- und Molybdänverbindungen als Additivlösung dem Abwasser zudosiert.

Um anaerobe Festbettfilter mit hoch belastetem Abwasser stabil gegen Schwefelwasserstoffvergiftung zu betreiben, wurde bereits versucht gelöste Eisenverbindungen als zusätzliches Additiv zu dosieren. Dies führte im praktischen Betrieb jedoch fallweise zu Ausfällungen durch chemische Reaktion mit den anderen Additivbestandteilen, so dass diese Methode nicht sicher den störungsfreien Betrieb des Aufstrom-Biofilters garantieren konnte.

Es wurde weiters bereits versucht, gelöste Eisensalze oder in Wasser suspendiertes frisch hergestelltes Eisenhydroxidgel in den Unterboden unterhalb des Aufstrom-Filterbetts zu dosieren. Diese Verfahrensweise versagte aber häufig, weil infolge der laminaren hydraulischen Strömungsbedingungen mit Aufstrom-Geschwindigkeiten von kleiner als einem Meter pro Stunde keine genügend gleichmäßige Vermischung der injizierten Eisenverbindungen mit dem Abwasserstrom im Filterraum des Biofilters möglich ist. Darüber hinaus ergaben Versuche zur reproduzierbaren Herstellung eines nicht gealterten gleichmäßigen Eisenhydroxidgels technische Probleme, die nicht lösbar waren.

Die JP 2003 266074 A befasst sich mit dem Problem, das Absenken der Kapazität bei der Entfernung von Stickstoffverbindungen zu verhindern, das mit einem Abfall der Temperatur der Außenluft in einem Abwasserbehandlungsgerät verbunden ist, um Phosphor und Stickstoffverbindungen zu entfernen. Dazu ist wenigstens ein Satz von Elektroden vorgesehen, die eine Kathode aus einem elektrischen Leiter, der ein Element der Gruppe IB oder 2IB des periodischen Systems oder einen Leiter, der mit diesem Element beschichtet ist, aufweist. Eine Anode, die aus einem unlöslichen, metallischen Material hergestellt ist und Chlor erzeugen kann, und eine Anode, die aus Eisen hergestellt ist, und die in einem elektronischen Bearbeitungstank vorgesehen sind. Die Elektroden sind so angeordnet, dass die Anoden auf beiden Seiten der Kathode liegen. In der Anode aus Eisen kann das Eisen automatisch zugeführt werden, so dass das Volumen des in dem Behandlungswasser eingetauchten Eisens nahezu konstant ist.

Die JP 2006 095466 A befasst sich mit dem Problem, ein elektrolytisches Verfahren ohne Kathodenzersetzung in dem gleichen elektrolytischen Tank bereitzustellen und es zu ermöglichen, dass Stickstoff und Phosphor kontinuierlich entfernt werden. Das elektrolytische Behandlungsgerät und ein Abwasserreinigungstank sind vorgesehen, die organisches Material, Stickstoff und Phosphor mit einem hohen Wirkungsgrad entfemen sollen. Das Elektrolysegerät zum Entfernen einer Stickstoffverbindung und einer Phosphorverbindung in dem Abwasser durch Elektrolyse umfasst einen ersten Tank, in den das Abwasser fließt, einen zweiten Tank, in den das durch den ersten Tank fließende Abwasser hindurch tritt, und eine Kathodenelektrode und eine Anodenelektrode aufweist, die jeweils in dem ersten und dem zweiten Tank angeordnet sind. Eine Einrichtung ist vorgesehen, bei der eine Elektrode als Anode dazu dient, während einer Stromführung Metallionen freizusetzen, die mit den Phosphorionen reagieren, und die die Elektrodenpolarität umzuschalten.

Die CN 101024534 A bezieht sich auf ein biologisch, elektrochemisches System zur Verarbeitung von Farbabwasser. Ein Mikroelektrolysefilter ist mit Sauerstoffumsetzungsreaktor mit biologischem Film durch eine Leitung verbunden. Der Flüssigkeitsausstoß des Reaktors ist mit einem Recyclingkanal durch eine Leitung verbunden. Der Flüssigkeitsauslass des Recyclingkanals ist mit einer Elektroflockulationskammer verbunden. Der Gasauslass des Kanals und des Reaktors ist mit einem biologischen Geruchentfemungsreaktor durch eine Leitung verbunden. Durch die Einrichtung soll die biochemische Charakteristik des Abwassers verbessert werden. Der Recyclingoxidationskanal kann organisches Material im Wasser entfernen. Der Elektrolysetank kann suspendierte Teilchen entfernen, und der biologische Geruchentfemungsreaktor entfernt den Geruch von dem Abwasser.

Die 20 2008 003027 betrifft eine Anodenvorrichtung für eine Elektroflockulationszelle, bei der ein vom Rohwasser von unten nach oben durchflossenes Bett aus Metallgranulat lose in einem Zellenkasten aus Isoliermaterial auf einer elektrisch leitenden, mit Isolierstoffdüsen versehenen Elektrodenplatte als Stromzuführung zum Metallgranulat angeordnet ist, wobei nicht leitende hydraulische Rohrverbindungen von den Isolierstoffdüsen zu Auslassstutzen eines horizontalen, hydraulischen Rohrverteilers für Rohwasser und wenigstens zwei in den Rohrverteiler hineinragende, mit Gaszufuhreinrichtungen verbundene Gasinjektoren für die Zufuhr von Treibgas vorgesehen sind, und wobei Strömungsmittelverbindungen für das Treibgas und das Rohwasser von den Auslassstutzen des Rohrverteilers durch die nicht leitenden Rohrverbindungen und die Isolierstoffdüsen zu dem im Zellenkasten befindliche Metallgranulat vorhanden ist.

Aufgabe der Erfindung ist es, eine wartungsarme und betriebsichere anaerobe, im Aufstrom betriebene Festbettfiltervorrichtung zur Reinigung von hoch belastetem Abwasser bereitzustellen, deren Einsatzfähigkeit auch nach langen Betriebszeiten gewährleistet ist, verbunden mit einer wesentlich höheren gleichmäßigen Abbauleistung und Biogasproduktion pro Quadratmeter installierte Grundfläche.

Diese Aufgabe wird durch eine Reinigungsvorrichtung für hoch belastetes Abwasser gelöst, die umfasst ein im Aufstrom betriebenes anaerobes Festbettfilter, eine mit einem Überlauf des Festbettfilters hydraulisch verbundene Elektroflockulationzelle mit beweglicher Eisengranulatanode, und eine mit einem Ablauf der Elektroflockulationszelle hydraulische verbundene Mikroflockulatpumpe, welche ausgelegt ist, um einen Teilstrom des in der Elektroflockulationzelle gebildeten eisenhaltigen Mikroflockulats direkt in das anaerobe Festbettfilter zurück zu pumpen.

Es wurde festgestellt, dass sich das frische, nicht gealterte eisenhaltige Mikroflockulat, welches beim Durchleiten von anaerob gereinigtem Abwasser durch eine der vorerwähnten patentierten Elektroflockulationszellen mit beweglichen Eisenelektroden bildet, störungsfrei mit additivhaltigem Abwasser mischt und damit das Problem der Schwefelwasserstoffvergiftung der anaeroben Mikroorganismen beseitigt wird.

Bei der efindungsgemäßen Vorrichtung wird ein Teil des in der Elektroflockulationzelle mit beweglicher Eisengranulatanode erzeugten, eisenhaltigen Mikroflockulat durch die Mikroflockulatpumpe automatisch und in kürzester Zeit störungsfrei in den Bodenflansch des Anaerobfilters gepumpt, so dass die gleichmäßige Leistungsfähigkeit der Mikroorganismen auch bei Anwesenheit von bei der anaeroben Gärung aus Sulfationen gebildeten Schwefelwasserstoff gewährleistet ist.

Bei der erfindungsgemäßen Vorrichtung wird durch Verwendung eines Aufstrom-Vorfilters die hydraulische Entkopplung während des laufenden Betriebes gewährleistet und sichergestellt, dass nur Abwasser mit geringem suspendierten Feststoffanteil in den Bodenflansch des anaeroben Festbettfilters gelangt Durch die hydraulische Entkopplung wird auch beim Rückspülvorgang des Aufstrom-Vorfilters die Funktionsfähigkeit des Anaerobfilters in keiner Weise beeinträchtigt

Vermittels der vorbeschriebenen physikalischen Weiterbehandlung ermöglicht die erfindungsgemäße, im Aufstrom betriebene Festbettfiltervorrichtung auf einfachste Weise die Gewinnung von Brauchwasser nach EU-Norm aus hoch belastetem Abwasser bei gleichzeitiger Gewinnung von Biogas.

Die vorliegend beschriebenen kompakten Ausführungsformen der Erfindung bieten eine überraschende Anzahl von wichtigen technischen Vorteilen. Bei der erfindungsgemäßen Einrichtung sind keine Ventile zur Absperrung des Wasserstroms durch die Vorrichtung zu öffnen oder zu schließen. Dadurch wird die Herstellung und Konstruktion der Vorrichtung wesentlich vereinfacht und die Notwendigkeit zusätzlicher Regelvorrichtungen entfällt

Weiterhin erreicht man durch die Einrichtung eine überaus zuverlässige Rückspülung des Vorfilters lediglich durch zeitweiliges Öffnen des Rückspülventils, ohne dass der Betrieb des anaeroben Aufstromfilters unterbrochen wird.

Eine weitere Sicherung für außergewöhnliche Betriebszustände besteht darin, dass die Reinigungsvorrichtung während des Betriebes weitgehend immun ist gegen Schwankungen in der Abwasserzusammensetzung und dass durch die stetige Zufuhr von frischem, nicht gealtertem Mikroflockulat mittels der Mikroflockulatpumpe stets ein optimaler Schutz gegen die Vergiftung und Minderleistung der an der anaeroben Abwasserreinigung beteiligten Mikroorganismen gewährleistet ist.

Eine vorteilhafte Ausgestaltung der Erfindung ist gekennzeichnet durch ein dem Festbettfilter vorgeschaltetes, als erstes vom Abwasser durchströmtes physikalisches Aufstrom-Vorfilter mit körniger Filtermasse, welches hydraulisch mit einem Bodenflansch des Festbettfilters verbunden ist.

Eine weitere vorteilhafte Ausgestaltung der Erfindung ist gekennzeichnet durch eine Mischleitung zwischen dem Überlauf des Festbettfilters und einem Zulauf am Boden des Festbettfilters, in die eine mit dem Vofilter verbundene Fallleitung mündet, wobei das von einer Umlaufpumpe in der Mischleitung geförderte Wasser sich mit dem aus der Fallleitung zufließenden Filtratwasser des Vorfilters mischt.

Eine vorteilhafte Ausgestaltung der Erfindung ist dadurch gekennzeichnet, dass die Schmutzwasserpumpe eine selbstansaugende Verdrängerpumpe, z. B. in Form einer Schlauchpumpe oder einer Membranpumpe, ist, wodurch auf Absperr- und Rückschlagventile verzichtet werden kann.

Eine weitere vorteilhafte Ausgestaltung der Erfindung ist dadurch gekennzeichnet, dass die Mikroflockulatpumpe eine selbstansaugende Verdrängerpumpe, z. B in Form einer Schlauchpumpe oder einer Membranpumpe, ist, wodurch auf Absperr- und Rückschlagventile verzichtet werden kann.

Eine weitere vorteilhafte Ausgestaltung der Erfindung ist dadurch gekennzeichnet, dass die Umlaufpumpe eine Kreiselpumpe ist, wodurch ein pulsationsfreier Zulauf des Abwassers und des Umlaufwassers zum anaeroben Festbettfilter gewährleistet ist und auf Pulsationsdämpfer verzichtet werden kann.

Eine weitere vorteilhafte Ausgestaltung der Erfindung ist dadurch gekennzeichnet, dass die körnige Filtermasse aus Zeolith, vorzugsweise Clinoptiolith, besteht, das vorzugsweise eine Reinheit von mindestens 94 Gew-% Clinoptilolith hat Diese Materialien sind im Hinblick auf den Wirkungsgrad als körnige Filtermasse besonders geeignet.

Eine weitere vorteilhafte Ausgestaltung der Erfindung ist dadurch gekennzeichnet dass die Elektroflockulationszelle eine obere und eine untere Elektrode aufweist, die mit einer Stromquelle verbunden und in den Abwasserstrom aus dem anaeroben Festbettbiofilter eingetaucht sind, wobei die untere Elektrode ein poröses Bett aus losem Eisengranulat aufweist, und die obere Elektrode ein Metall-Gitternetz oder Rippengitter aufweist Durch diese Ausgestaltung der Elektroflockulationzelle werden mit einfachen Mitteln eine gute Einleitung des elektrischen Stroms in die Zelle und ein entsprechender Wirkungsgrad erzielt.

Eine weitere vorteilhafte Ausgestaltung der Erfindung ist dadurch gekennzeichnet, dass die Stromquelle 56 auf eine Zellenspannung von 40 bis 60 Volt ausgelegt ist Diese Zellenspannung ist im Bezug auf die Sicherheit der Zelle und den Wirkungsgrad vorteilhaft.

Eine weitere vorteilhafte Ausgestaltung der Erfindung ist dadurch gekennzeichnet, dass die obere Elektrode mechanisch in vertikale Schwingungen zu versetzen ist, wodurch das elektrische Feld zwischen den beiden Elektroden variiert und damit ein besserer Wirkungsgrad bei der Flockulation erreicht wird.

Eine weitere vorteilhafte Ausgestaltung der Erfindung ist dadurch gekennzeichnet, dass die untere Elektrode ein poröses Bett aus Eisenteilchen und die obere Elektrode ein Eisen- oder Aluminium-Gitternetz oder-Rippengitter aufweist Ein derartiges poröses Bett sorgt für einen guten Kontakt zwischen den zu flockulierenden Teilchen und dem Strom.

Eine weitere vorteilhafte Ausgestaltung der Erfindung ist dadurch gekennzeichnet, dass an der unteren Elektrode eine Gaszufuhrleitung angeordnet ist. Durch die Gaszufuhr an die untere Elektrode werden die porösen Anodenteilchen wirkungsvoll durchmischt, so dass die gesamte freie Oberfläche des porösen Anodengranulats für die Flockulation zur Verfügung steht und Ablagerungen die Elektroflockulationszelle nicht verstopfen können.

Eine weitere vorteilhafte Ausgestaltung der Erfindung ist dadurch gekennzeichnet, dass das Filtermedium aus vielen einzelnen Kunststoffkörpern besteht, welche vorzugsweise die Form von Ringen oder offenen Formkörpern mit einem größten Durchmesser von je 0,1 bis 0,3 Meter und einer spezifischen Oberfläche von etwa 50 bis 150 m² pro Kubikmeter haben, und die auf Grund ihres geringen spezifischen Gewichtes im Wasser schwimmen und so den Aufbau des Filtermedium besonders einfach ermöglichen.

Eine weitere vorteilhafte Ausgestaltung der Erfindung ist dadurch gekennzeichnet dass das Filtermedium aus vielen einzelnen vertikalen Kunststoffröhren besteht, mit vorzugsweise netzartiger oder gerippter Oberfläche, die je 0,05 bis 0,1 Meter Durchmesser und eine spezifische Oberfläche von etwa 50 bis 150 m² pro Kubikmeter haben, und so einen besonders günstigen Strömungsfluss des Abwassers im anaeroben Festbettfilter ermöglichen.

Ausführungsbeispiele der Erfindung werden an Hand der beigefügten Zeichnung erläutert, in der schematisch das Fließschema der erfindungsgemäßen Vorrichtung gezeigt ist.

Ein Vorfilter 10 weist auf die Zulaufleitung 16, welche in einen Filterboden 12 mündet. Am unteren Teil des Filterbodens 12 befindet sich ein Rückspülventil 19. Eine Filterdüsenplatte 101 mit den Filterdüsen (nicht eingezeichnet) sitzt zwischen dem mit Flanschen verbundenen Filterboden 12 und einem Filtratwassertank 11. Der Filtratwassertank 11 ist teilweise gefüllt mit einem körnigen Filtermedium 13. Dieses ruht auf der Filterdüsenplatte 101. Am oberen Ende des Filtratwassertanks 11 ist eine Steigleitung 15 angeflanscht. Die Steigleitung 15 ist im Filtrationsbetrieb bis zum Niveau L1 mit Wasser gefüllt. Die Höhe von L1 ist im Wesentlichen durch einen von der Steigleitung 15 T-förmig abgesetzten Filterablauf 14 festgelegt.

Ein im Aufstrom betriebener anaerober Festbettfilter 20 weist einen Filtertank 22 auf, an dessen unterem Ende seitlich an der Tankwand oder, wie an der Bodenplatte des Festbettfilters 20 eingezeichnet ist, sich mindestens eine Bodenflansch 21 befindet Der Bodenflansch 21 ragt in den Filtertank 22 hinein und kann weitere Zulaufverteiler enthalten (nicht gezeigt).

Geeignete, am Bodenflansch 21 hydraulisch angeschlossene Zulaufverteiler, durch die das Abwasser in eine, vom Reaktorquerschnitt aus gesehen, kreisförmige Strömung umgelenkt wird, sind beispielsweise beschrieben bei: Francisco Omil, Juan M. Garrido, Belén Arrojo, Ramón Méndez, "Anaerobic filter reactor performance for the treatment of complex dairy wastewater at industrial scale" ;Water Research 3 (203) 4099-4108

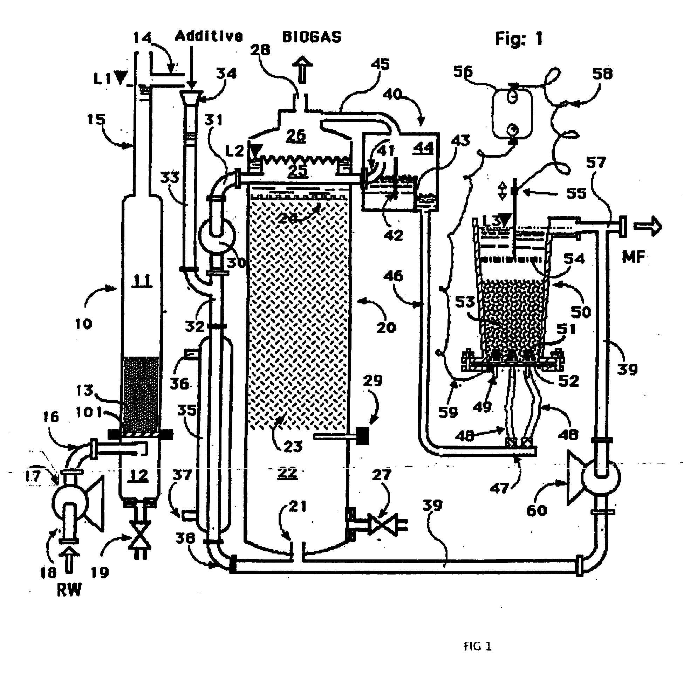

Der Filtertank 22 ist teilweise gefüllt mit dem Filtermedium 23, welches aus Kunststoff besteht und dessen Werkstoffdichte kleiner als 1 ist Infolgedessen schwimmt das Filtermedium 23 nach oben und wird durch das im Filtertank 22 fest montierte Haltegitter 24 daran gehindert, bis zur Höhe des Auslaufwehrs 25 aufzuschwimmen. Das Auslaufwehr 25 besteht aus einem oben offenen Kasten mit Einlaufschlitzen, die wie in Fig.1 eingezeichnet, eine Dreiecksform aufweisen können. Beim Ablauf des anaerob gereinigten Abwassers stellt sich vor den Einlaufschlitzen des Auslaufwehrs 25 das Flüssigkeitsniveau L2 im Filtertank 22 ein. Der Raum 26 oberhalb des Auslaufwehrs 25 ist der Gasdom 26, in dem sich das bei dem anaeroben Filtrationsprozess erzeugte Biogas sammelt, bevor es das anaerobe Festbettfilter 20 durch die Gasaustrittleitung 28 verlässt.

Eine Elektroflockulationszelle 50 umfasst, wie aus Fig. 1 hervorgeht, einen Zellenkasten aus Isoliermaterial und einer an den Boden des Zellenkastens angeflanschten Anodenplatte 52. Diese Anodenplatte 52 besteht aus einem Werkstoff mit guter Leitfähigkeit. In die Anodenplatte 52 flüssigkeitsdicht eingesetzt sind mehrere Einlassdüsen 51. Auf der Anodenplatte 52 und um die Einlassdüsen herum lagert das bewegliche Anodengranulat 53 aus Eisenspänen. Der Zellenkasten der Elektroflockulationszelle 50 ist während des Betriebes bis zur Niveauhöhe L3 mit Flüssigkeit gefüllt. Oberhalb der Schicht von Anodengranulat 53 und unterhalb des Flüssigkeitsspiegels L3 ist das Kathodengitter 54 aus Betonbewehrungsstahl montiert. Durch die Halterung 55 kann das Kathodengitter 54 bewegt werden. (Bewegungsantrieb nicht eingezeichnet).

Das Kathodengitter 54 ist durch die elektrische Leitung 58 mit dem Minuspol des Gleichstromgenerators 56 verbunden. Die Anodenplatte 52 ist durch die elektrische Leitung 59 mit dem Pluspol des Gleichstromgenerators 56 verbunden.

Einzelheiten der vorteilhaften Ausgestaltung der Elektroflockulationszelle 50 kann der DE 20 2008 003 027 entnommen werden. Die Elektroflockulationszelle 50 kann auch gemäß PCT/EP2006/005384 ausgebildet sein.

Die Figur der erfindungsgemäßen Vorrichtung zeigt weiterhin den Entgasungskasten 40 zur Abtrennung von Restmengen Biogas aus dem anaerob gereinigten Wasser. Der Entgasungskasten 40 ist allseitig geschlossen. Der 90 Grad Zulaufbogen 41 ist an der linken Kastenseite gas- und flüssigkeitsdicht eingesetzt. Der Kasten enthält das Zwischenwehr 42, durch welches die zu entgasende Flüssigkeit nur durch einen unteren Schlitz durchfließen kann. Der Entgasungskasten 40 enthält weiterhin ein Überlaufwehr 43, über das die zu entgasende Flüssigkeit strömt, bevor sie aus dem Entgasungskasten 40 in die Gasfreileitung 46 fließt Das im Entgasungskasten 40 freigewordene Gas sammelt sich im Gasraum 44 und strömt durch die Entgasungsleitung 45 in den Gasdom 26.

Zur Aufrechterhaltung einer gleichmäßigen Aufwärtsströmung im anaeroben Festbettfilter 20 weist die erfindungsgemäße Vorrichtung weiterhin eine Umlaufpumpe 30 auf, welche durch die Umlaufleitung 31 mit einem Teilstrom des aus dem Auslaufwehr 25 fließenden anaerob gereinigten Wassers gespeist wird. Das von der Umlaufpumpe 30 geförderte Wasser fließt in die Mischleitung 32, wo es sich mit dem aus der Fallleitung 31 zufließenden Filtratwasser des Vorfilters 10 mischt. Das mit dem Filtratwasser gemischte Umlaufwasser wird durch einen Wärmetauscher 35 gepumpt. Der Wärmetauscher 35 weist mindestens einen Flansch 36 auf für den Eintritt von Dämpf bzw. den Austritt von Heißwasser oder Wärmeträgerflüssigkeit Der Wärmetauscher 35 hat weiterhin mindestens einen Flansch 37 für den Austritt von Kondensat bzw. den Zufluss von Heißwasser oder Wärmeträgerflüssigkeit.

Das anaerobe Festbettfilter 20, die Umlaufpumpe 30 und der Wärmetauscher 35 nebst Umlaufleitungen sind gegen Wärmeverluste (nicht eingezeichnet) isoliert, damit im anaeroben Festbettfilter 20 eine Temperatur von mindestens 30° Celsius aufrechterhalten werden kann. Durch eine Temperaturmess- und Regelvorrichtung 29 kann die Zufuhr von Dampf oder Heißwasser oder Wärmeträgerflüssigkeit zum Wärmetauscher 35 geregelt werden.

Wie aus der Figur zu ersehen ist, gelangt ungereinigtes Abwasser RW über die Saugleitung 18 in die Schmutzwasserpumpe 17 und wird durch die Leitung 16 in den Filterboden 12 des Vorfilters 10 gepumpt Der Abwasserstrom wird von dort durch die Filterdüsenplatte 101 aufwärts in das Bett mit körniger Filtermasse 13 gefördert, wo die im Abwasser suspendierten Stoffe zurückgehalten werden. Die Schmutzwasserpumpe 17 ist vorzugsweise eine Schlauchpumpe, wodurch außer dem Rückspülventil 19 keine weiteren zu bewegenden Ventile für den Betrieb des Vorfilters 10 benötigt werden.

Der so von suspendierten Stoffen befreite Abwasserstrom fließt weiter aufwärts durch den Filtratwassertank 11, dann in die Steigleitung 15 bis hoch zum Flüssigkeitsniveau L1 gebildet durch den Filterauslauf 14.

Aus dem Filterauslauf 14 fließt der Abwasserstrom in den Fülltrichter 34. In den Fülltrichter 34 werden außerdem durch weitere Dosierpumpen (nicht eingezeichnet) kontinuierlich die notwendigen, vorerwähnten Additive als Lösungen zudosiert Additive und Abwasserstrom mischen sich im Fülltrichter 34 und fließen abwärts durch die Fallleitung 33 in die Mischleitung 32, wo eine turbulente Vermischung mit dem durch die Pumpe 30 geförderten Umlaufwasserstrom stattfindet. Nach Durchlauf durch den Wärmetauscher 35 und die Zulaufleitung 38 fließt das mit dem Umlaufwasserstrom verdünnte, additivierte Abwasser durch den Bodenflansch 21 in den Filtertank 22 des anaeroben Festbettfilters 20.

Das in den Filtertank 22 unten eintretende Wasser strömt aufwärts durch das Filtermedium 23, wo der biologische Reinigungsprozess durch Stoffwechselprozesse mit den auf dem Filtermedium 23 siedelnden Mikroorganismen stattfindet. Das anaerob biologisch gereinigte Abwasser strömt aufwärts aus dem Filtermedium 23 durch das Haltegitter 24 in das Auslaufwehr 25. Im Auslaufwehr 25 teilt sich der Wasserstrom. Das Umlaufwasser fließt durch die Umlaufleitung 31 zurück zur Umlaufpumpe 30.

Das beim anaeroben Reinigungsprozess entstandene Biogas, welches in Form von Blasen im Wasser suspendiert ist, trennt sich zum größten Teil auf der Höhe des Flüssigkeitsspiegels L2 vom Wasser und sammelt sich im Gasdom 26.

Anaerob gereinigtes Abwasser, mengenmäßig etwa gleich dem Rohwasserstrom RW, fließt aus dem Auslaufwehr 25 und aus dem anaeroben Festbettfilter 20 in den Zulaufbogen 41 des Entgasungskastens 40. Im Entgasungskasten 40 wird das anaerob gereinigtes Abwasser gezwungen, unter dem Zwischenwehr 41 hindurch und über das Überlaufwehr 43 zu fließen und dabei Restmengen an suspendiertem Biogas in den Entgasungsraum 44 abzugeben. Diese Restmengen Biogas strömen aus dem Entgasungskasten 40 über die Entgasungsleitung 45 in den Gasdom 26 und von dort aus in die Gasaustrittleitung 28.

Das entgaste, anaerob gereinigte Abwasser fließt aus dem Entgasungskasten 40 nach unten in die Gasfreileitung 46 zum Düsenverteiler 47. Der Düsenverteiler 47 ist über Kunststoffschläuche 48 mit den Einlassdüsen 51 der Elektroflockulationszelle 50 verbunden. Mindestens eine Einlassdüse 49 in der Anodenplatte 52 der Elektroflockulationszelle 50 ist mit einer Inertgasquelle (nicht eingezeichnet) verbunden, in welche von Zeit zu Zeit kurzzeitig Inertgas in das Bett von Anodengranulat 53 injiziert wird, um das Anodengranulat 53 langsam umzuwälzen. Durch den Stromfluss zwischen Kathode 54 und dem eisernen Anodengranulat 53 werden Restmengen an suspendierten organischen Stoffen, welche im anaeroben Festbettfilter 20 in das anaerob gereinigte Abwasser gelangten, koaguliert und bilden ein eisenhaltiges Mikroflockulat MF.

Das eisenhaltige Mikroflockulat MF verlässt die erfindungsgemäße Vorrichtung durch den Mikroflockulatauslauf 57. Ein geringer Teilstrom des eisenhaltigen Mikroflockulats MF fließt durch die Mikroflockulatleitung 39 mittels Mikroflockulatpumpe 60 zurück in den Filtertank 22 und mischt sich im Bodenflansch 21 mit dem Umlaufwasser und dem ungereinigten Abwasser.

Da die einzelnen Baugruppen der Reinigungseinrichtung auf verschiedenen absinkenden Flüssigkeitsniveaus L1, L2 und L3 arbeiten, ist ein störungsfreier stetiger Durchlauf des Abwassers durch die Gesamtanlage gewährleistet Die Öffnung des Rückspülventils 19 am Vorfilter kann zu jedem beliebigen Betriebszeitpunkt geschehen. Dann fließt das Filtratwasser aus dem Filtratwassertank 11 und der Steigleitung 15 nach unten durch die körnige Filtermasse 13, spült diese Filtermasse frei von anhaftenden suspendierten Stoffen in den Filterboden 12 und diese Stoffe verlassen den Filterboden 12 durch das Rückspülventils 19. Es ist nicht zwingend notwendig, dass die Schmutzwasserpumpe 17 während des nur wenige Minuten dauernden Rückspülvorganges ausgeschaltet wird.

Der Hauptstrom des aus der Elektroflockulationzelle austretenden Mikroflockulats - mengenmäßig gleich dem Abwasserzufluss zum Anaerobfilter - kann vorteilhaft weiterbehandelt werden durch Einleiten in einen Reifetank gemäß Patentanmeldung DE 10 2008 029 923.5 mit nachfolgender Aufbereitung des Flockulats mit Filtration und Ultraviolettsterilisierung. Die Aufbereitung des Flockulats mit Filtration und Ultraviolettsterilisierung kann vorteilhaft auch nach PCT/IEP2007/011204 durchgeführt werden.

### Bezugszeichenliste

| | |
|---|---|
| 10 | Aufstromfilter |
| 11 | Filtratwassertank |
| 12 | Filterboden |
| 13 | körnige Filtermasse |
| 14 | Filterauslauf |
| 15 | Steigleitung |
| 16 | Druckleitung |
| 17 | Schmutzwasserpumpe |
| 18 | Saugleitung |
| 19 | Rückspülventil |
| 20 | Anaerobes Festbettfilter |
| 21 | Bodenflansch |
| 22 | Filtertank |
| 23 | Filtermedium |
| 24 | Haltegitter |
| 25 | Auslaufwehr |
| 26 | Gasdom |
| 27 | Schlammablassventil |
| 28 | Gasaustrittleitung |
| 29 | Temperaturmess- + Regelvorrichtung |
| 30 | Umlaufpumpe |
| 31 | Umlaufleitung |
| 32 | Mischleitung |
| 33 | Fallleitung |
| 34 | Fülltrichter |
| 35 | Wärmetauscher |
| 36 | Dampfeintritt-Warmwasseraustritt |
| 37 | Kondensatauslass-Warmwassereintritt |
| 38 | Zulaufleitung |
| 39 | Mikroflockulatleitung |
| 40 | Entgasungskasten |
| 41 | Zulaufbogen |
| 42 | Zwischenwehr |
| 43 | Überlaufwehr |
| 44 | Entgasungsraum |
| 45 | Entgasungsleitung |
| 46 | Gasfreileitung |
| 47 | Düsenverteiler |
| 48 | Schlauchleitung |
| 49 | Inertgaszufuhr |
| 50 | Elektroflockulationszelle |
| 51 | Einlassdüsen |
| 52 | Anodenplatte |
| 53 | Eisengranulat |
| 54 | Kathodengitter |
| 55 | Kathodenhalterung |
| 56 | Gleichstromgenerator |
| 57 | Mikroflockulatauslauf |
| 58 | Kathodenleitung |
| 59 | Anodenleitung |
| 60 | Mikroflockulatpumpe |
| 101 | Filterdüsenplatte |

## Patentansprüche

1. Reinigungsvorrichtung für hoch belastetes Abwasser umfassend:
ein im Aufstrom betriebenes, anaerobes Festbettfilter (20), und
eine eine Eisengranulatelektrode (52,53) aufweisende elektrische Zelle (50), die mit dem Festbettfilter (20) hydraulisch verbunden ist,
**dadurch gekennzeichnet, dass**
die elektrische Zelle eine mit einem Überlauf des Festbettfilters (20) über eine Leitung (46) hydraulisch verbundene Elektroflockulationszelle (50) mit beweglicher Eisengranulatanode (52,53) ist,
dass die Elektroflockulationszelle (50) einen Auslauf (57) für einen mengenmäßig einem Abwasserzufluss zu dem anaeroben Festbettfilter (20) gleichen Hauptstrom des Mikroflockulats (MF) aufweist,
und dass eine mit einem Ablauf (57) der Elektroflockulationszelle (50) hydraulische verbundene Pumpe (60) vorgesehen ist, die ausgelegt ist, um einen über eine Leitung (39) abgezweigten Teilstrom des in der Elektroflockulationszelle (50) gebildeten eisenhaltigen Mikroflockulats (MF) über die Leitung (39) direkt in einen Bodenflansch (21) des anaeroben _ _ _ Festbettfilters (20) zurück zu pumpen.

2. Vorrichtung nach Anspruch 1, **gekennzeichnet durch** ein dem Festbettfilter (20) vorgeschaltetes, als erstes vom Abwasser durchströmtes physikalisches Aufstrom-Vorfilter (10) mit kömiger Filtermasse (13), welches hydraulisch mit dem Bodenflansch (21) des Festbettfilters (20) verbunden ist.

3. Vorrichtung nach Anspruch 1 oder 2, **gekennzeichnet durch** eine Mischleitung (32) zwischen dem Überlauf des Festbettfilters (20) und einem Zulauf am Boden des Festbettfilters (20), in die eine mit dem Vorfilter verbundene Fallleitung (33) mündet, wobei das von einer Umlaufpumpe (30) in der Mischleitung (32) geförderte Wasser sich mit dem aus der Fallleitung (33) zufließenden Filtratwasser des Vorfilters (10) mischt.

4. Vorrichtung nach Anspruch 3, **gekennzeichnet durch** einen an der Mischleitung (32) vorgesehenen Wärmetauscher (35) mit einem Flansch (36) für den Eintritt von Dampf bzw. den Austritt von Heißwasser oder Wärmeträgerflüssigkeit.

5. Vorrichtung nach Anspruch 2, **dadurch gekennzeichnet, dass** die körnige Filtermasse (13) aus Zeolith, vorzugsweise Clinoptiolith, besteht, das vorzugsweise eine Reinheit von mindestens 94 Gew-% Clinoptilolith hat.

6. Vorrichtung nach Anspruch 1, **dadurch gekennzeichnet, dass** die Elektroflockulationszelle (50) eine obere Elektrode (54) und eine untere Elektrode (53) aufweist, die mit einer Stromquelle (56) verbunden und in den Abwasserstrom aus dem anaeroben Festbettbiofilter eingetaucht sind.

7. Vorrichtung nach Anspruch 6, **dadurch gekennzeichnet, dass** die untere Elektrode (53) ein poröses Bett aus losem Eisengranulat aufweist, und dass die obere Elektrode (54) ein Metall-Gitternetz oder Rippengitter aufweist.

8. Vorrichtung nach Anspruch 6, **dadurch gekennzeichnet, dass** die Stromquelle (56) auf eine Zellenspannung von 40 bis 60 Volt ausgelegt ist.

9. Vorrichtung nach Anspruch 6, **dadurch gekennzeichnet, dass** die obere Elektrode (54) mechanisch in vertikale Schwingungen zu versetzen ist.

10. Vorrichtung nach Anspruch 6, **dadurch gekennzeichnet, dass** die untere Elektrode (53) ein poröses Bett aus Eisenteilchen und die obere Elektrode (54) ein Eisen- oder Aluminium-Gitternetz oder -Rippengitter aufweist.

11. Vorrichtung nach Anspruch 6, **dadurch gekennzeichnet, dass** an der unteren Elektrode (53) eine Gaszufuhrleitung angeordnet ist.

12. Vorrichtung nach Anspruch 1, **dadurch gekennzeichnet, dass** das Filtermedium (23) des Festbettfilters (20)aus einzelnen Kunststoffkörpern besteht, welche die Form von Ringen oder offenen Formkörpern haben.

13. Vorrichtung nach Anspruch 1, **dadurch gekennzeichnet, dass** die Kunststoffkörper des Filtermediums (23) einem größten Durchmesser von je 0,1 bis 0,3 Meter und eine spezifische Oberfläche von etwa 50 bis 150 m² pro Kubikmeter haben.

14. Vorrichtung nach Anspruch 1, **dadurch gekennzeichnet, dass** das Filtermedium (23) des Festbettfilters (20) aus einzelnen vertikalen Kunststoffröhren mit netzartiger oder gerippter Oberfläche besteht,

15. Vorrichtung nach Anspruch 14, **dadurch gekennzeichnet, dass** die Kunststoffröhren des Filtermediums (23) je 0,05 bis 0,1 Meter Durchmesser und eine spezifische Oberfläche von etwa 50 bis 150 m² pro Kubikmeter haben.

## Claims

1. Cleaning device for heavily loaded waste water comprising:
an anaerobic packed bed filter (20) operated in an upflow mode, and
an electrical cell (50) comprising an iron granulate electrode (52, 53) which cell is hydraulically connected to the packed bed filter (20),
**characterized in that**
the electrical cell is an electro flocculation cell (50) having a moveable iron granulate anode (52, 53) which cell is hydraulically connected to an overflow of the packed bed filter (20),
that the electro flocculation cell (50) comprises a discharge (57) for a main stream of the micro flocculate (MF) which main stream is, as concerns its volume, equal to the waste water input to the anaerobic packed bed filter (20),
and that a pump (60) is provided which is hydraulically connected to the outlet (57) of the electro flocculation cell (50) which pump is configured to pump back a partial stream branched off by a conduit (39) of the iron containing micro flocculate (MF) formed in the electro flocculation cell (50) through the conduit (39) directly to a bottom flange (21) of the anaerobic packed bed filter (20).

2. Device according to claim 1, **characterized by** a physical upstream-prefilter (10) having a granular filter mass (13) and being arranged upstream of the packed bed filter (20) and being passed by the waste water at first, which prefilter is hydraulically connected to the bottom flange (21) of the packed bed filter (20).

3. Device according to claim 1 or 2, **characterized by** a mixing conduit (32) between the overflow of the packed bed filter (20) and an inflow at the bottom of the packed bed filter (20) into which mixing conduit a downpipe (33) is leading which is connected to the prefilter, wherein the water advanced by a rotating pump (30) in the mixing conduit (32) is mixing with the filtrate water of the prefilter (10) flowing in from the downpipe (33).

4. Device according to claim 3, **characterized by** a heat exchanger (35) provided at the mixing conduit (32) and having a flange (36) for the input of vapor or the output of hot water or heat exchanger liquid, respectively.

5. Device according to claim 2, **characterized in that** the granular filter mass (13) consists out of ceolith, preferable clinoptiolith, which preferable has a degree of purity of at least 94 weight-% of clinoptiolith.

6. Device according to claim 1, **characterized in that** the electro flocculation cell (50) comprises an upper electrode (54) and a lower electrode (53) which are connected to a current source (56) and are submerged in the waste water stream from the anaerobic packed bed bio filter.

7. Device according to claim 6, **characterized in that** the lower electrode (53) comprises a porous bed of loose iron granulates, and that the upper electrode (54) comprises a metal grid net or a rip grid.

8. Device according to claim 6, **characterized in that** the current source (56) is designed for a cell voltage of 40 to 60 volt.

9. Device according to claim 6, **characterized in that** the upper electrode (54) is adapted to be mechanically brought into vertical vibrations.

10. Device according to claim 6, **characterized in that** the lower electrode (53) comprises a porous bed out of iron particles and the upper electrode (54) comprises a iron or aluminum grid net or -rip grid.

11. Device according to claim 6, **characterized in that** a gas input line is arranged at the lower electrode (53).

12. Device according to claim 1, **characterized in that** the filter medium (23) of the packed bed filter consists out of individual plastic bodies which have the shape of rings or open mold bodies.

13. Device according to claim 1, **characterized in that** the plastic bodies of the filter medium (23) have a largest diameter of 0,1 to 0,3 meter each and a specific surface of 50 to 150 m² per cubic meter.

14. Device according to claim 1, **characterized in that** the filter medium (23) of the packed bed filter (20) consists out of individual, vertical plastic tubes having a netlike or ripped surface.

15. Device according to claim 14, **characterized in that** the plastic tubes of the filter medium (23) have a diameter of 0,05 to 0,1 meter each and a specific surface area of about 50 to 150 m² per cubic meter.

## Revendications

1. Dispositif d'épuration d'eaux hautement usées comprenant:
un filtre anaérobie à lit fixe (20) opérée à flux ascendant et
une cellule électrique (50) présentant une électrode de granule de fer (52, 53) reliée hydrauliquement au filtre à lit fixe (20),
**caractérisé en ce que**
la cellule électrique est une cellule d'électrofloculation (50) reliée hydrauliquement par une conduite (46) au déversoir du filtre à lit fixe (20) avec une anode de granule de fer (52, 53),
que la cellule d'électrofloculation (50) est dotée d'une purge (57) pour un courant principal du microfloculat (MF) quantitativement égal de l'afflux d'eaux usées jusqu'au filtre anaérobie à lit fixe (20),
et qu'une pompe (60) reliée hydrauliquement à un conduit d'écoulement (57) de la cellule d'électrofloculation (50) est placée et disposée de façon à pomper un courant partiel du microfloculat ferreux (MF) formé dans la cellule d'électrofloculation (50), détourné à l'aide d'une conduite (39), directement dans une bride de base (21) du filtre anaérobie à lit fixe (20) via une conduite (39).

2. Dispositif selon la revendication 1, **caractérisé par** un préfiltre physique à courant ascendant (10) avec une masse filtrante granuleuse (13) disposé en amont du filtre à lit fixe (20) et traversé d'abord par des eaux usées, qui est relié hydrauliquement à la bride de base (21) du filtre à lit fixe (20).

3. Dispositif selon les revendications 1 ou 2, **caractérisé par** une conduite de mélange (32) entre déversoir du filtre à lit fixe (20) et un afflux au fond du filtre à lit fixe (20), dans laquelle afflue une conduite d'écoulement (33) reliée au préfiltre, où l'eau acheminée à partir d'une pompe de circulation (30) vers la conduite de mélange (32) se mélange avec l'eau de filtration du préfiltre (10) s'écoulant de la conduite d'écoulement (33).

4. Dispositif selon la revendication 3, **caractérisé par** un échangeur thermique (35) intégré à la conduite de mélange (32) avec une bride (36) pour recueillir la vapeur ou l'eau chaude ou le fluide caloporteur.

5. Dispositif selon la revendication 2, **caractérisé en ce que** la masse filtrante granuleuse (13) est composée de zéolithe, préférablement de clinoptilolithe, qui dispose préférablement d'une pureté d'au moins 94 %m de la clinoptilolite.

6. Dispositif selon la revendication 1, **caractérisé en ce que** la cellule d'électrofloculation (50) présente une électrode supérieure (54) et une électrode inférieure (53) qui sont reliées à une source de courant (56) et submergés dans les eaux usées en provenance du biofiltre anaérobie à lit fixe.

7. Dispositif selon la revendication 6, **caractérisé en ce que** l'électrode inférieure (53) présente un lit poreux composé de granules de fer en vrac et que l'électrode supérieure (54) présente une grille de métal ou une grille à nervures.

8. Dispositif selon la revendication 6, **caractérisé en ce que** la source de courant (56) est disposée à une tension de cellule de 40 à 60 volts.

9. Dispositif selon la revendication 6, **caractérisé en ce que** l'électrode supérieure (54) se déplace mécaniquement en oscillations verticales.

10. Dispositif selon la revendication 6, **caractérisé en ce que** l'électrode inférieure (53) présente un lit poreux en petites pièces de fer et l'électrode supérieure (54) une grille en aluminium quadrillée ou à nervures.

11. Dispositif selon la revendication 6, **caractérisé en ce que** l'électrode inférieure (53) est agencée avec une conduite d'alimentation en gaz.

12. Dispositif selon la revendication 1, **caractérisé en ce que** l'élément filtrant (23) du filtre à lit fixe (20) est composé de corps de plastique individuels, lesquels ont la forme d'anneaux ou d'autres moulages ouverts.

13. Dispositif selon la revendication 1, **caractérisé en ce que** les corps de plastique de l'élément filtrant (23) ont chacun un diamètre maximal de 0,1 à 0,3 mètre et une surface spécifique d'environ 50 à 150 m² par mètre cube.

14. Dispositif selon la revendication 1, **caractérisé en ce que** l'élément filtrant (23) du filtre à lit fixe (20) est composé de tubes de plastiques verticaux individuels avec une surface quadrillée ou nervurée.

15. Dispositif selon la revendication 14, **caractérisé en ce que** les tubes de plastique de l'élément filtrant (23) ont chacun un diamètre de 0,05 à 0,1 mètre et une surface spécifique d'environ 50 à 150 m² par mètre cube.
